# EUROPEAN PATENT APPLICATION

(11) **EP 1 837 772 A1**
(43) Date of publication of application: **26.09.2007**
(21) Application number: 05805545.0
(22) Date of filing: 04.11.2005
(51) Int. Cl.: G06F 12/00, G06F 12/16

(54) **DATA RECORDER AND COMMODITY PROCESSING APPARATUS HAVING SAME**

(30) Priority: 08.11.2004 JP 2004323135
(71) Applicant: ISHIDA CO., Ltd., Kyoto-shi, Kyoto 606-8392 (JP)
(72) Inventor: KAGATSUME, Hidetaka, c/o ISHIDA CO., LTD, Ritto-shi, Shiga 5203026 (JP); HASHIGUCHI, Nobuki, c/o ISHIDA CO., LTD, Ritto-shi, Shiga 5203026 (JP)
(74) Representative: Altenburg, Udo
(86) International application number: PCT/JP2005/020310
(87) International publication number: WO 2006/049255

(57) **Abstract**

The present invention provides a data recording device, wherein FAT and directory data, which are file managing information, are protected, whereby, during a restart, the FAT and directory data can be restored to a state that was in effect directly before a file update or another file operation even when a power source is interrupted during the file operation; and a goods-processing apparatus comprising same. The data recording device (20) comprises CompactFlash (2) and SRAM (4), wherein the files are managed by a FAT file system. The CompactFlash (2) records file data of a file, a FAT, and directory data. The SRAM (4) is provided with a backup region. The FAT and directory data are backed up to the backup region before the FAT and directory data are updated.

## Description

### TECHNICAL FIELD

The present invention relates to a data recording device for managing files using a FAT file system and to a goods-processing apparatus comprising same.

### BACKGROUND ART

Over the past several years, the need has arisen to save and manage production information and other information related to goods in order to deal with traceability and HACCP. In a machine for weighing and packaging goods or another goods-processing apparatus, a FAT file system (for example, see Patent Document 1) that is compatible with a Windows (registered trademark) computer is installed in order to deal with such conditions, whereby production information and the like are saved and managed.

The FAT file system comprises a data region in which file data, i.e., a main body of data is recorded in cluster units; a directory region in which file managing information about file names, creation times and dates, file properties, file sizes, starting clusters, and others is recorded; a FAT region in which file managing information about locations and order of clusters in the data region used by files and others is recorded; and a boot sector in which a boot record is recorded.

When a file is updated in the FAT file system, the old file data in the data region must be overwritten by the new file data, and the old file managing information in the FAT region and directory region must also be overwritten by the new file managing information. Patent Document 1: Japanese Laid-open Patent Application No. 11-149401

### DISCLOSURE OF THE INVENTION

### PROBLEMS TO BE SOLVED BY THE PRESENT INVENTION

For this reason, when a power source for the goods-processing apparatus is interrupted while data is being written to the data region due to a blackout or the like, the component part of the file data that was written before the power source was interrupted and the component part of file data that was present before writing began will be mixed in the data region, and, as a result, the file data will be destroyed.

When the power source is interrupted while data is being written to the directory region or FAT region, file managing information about the file names, creation times and dates, file properties, file sizes, starting clusters, locations and order of used clusters, and others will be destroyed; the file data will not match the file managing information; and the files may no longer be accessible.

In particular, in CompactFlash (registered trademark), sectors that are to be written to must be erased before the data is written. Therefore, when the power source is interrupted directly after the erasing procedure, file managing information relating to that particular sector will be completely lost. In such instances, files other than those that were being accessed may also become inaccessible.

The present invention was devised in view of the foregoing circumstances, and it is an object of the present invention to provide a data recording device in which a file allocation table (referred to below simply as "FAT") and directory data which are file managing information are protected, whereby, during a restart, the FAT and directory data can be restored to a state that was present directly before a file update or another file operation even when a power source is interrupted while such a file operation; and a goods-processing apparatus comprising same.

### MEANS USED TO SOLVE THE ABOVEMENTIONED PROBLEMS

A data recording device according to a first aspect of the invention is a data recording device for managing files using a FAT file system, and comprising a recording medium and nonvolatile memory. The recording medium records file data, a FAT, and directory data related to the files. A backup region is provided in the nonvolatile memory. The FAT and directory data are backed up in the backup region before the FAT and directory data are updated.

The data recording device comprises nonvolatile memory. When the FAT, directory data, and other file managing information are updated, the FAT and directory data are backed up to the backup region provided to the nonvolatile memory before being updated. Accordingly, in the data recording device, the FAT and directory data are protected. Therefore, during a restart, the FAT and directory data can be restored to a state that was present directly before a file operation was performed even if the power source was interrupted during the file operation.

This includes instances in which the recording medium and nonvolatile memory are the same.

A data recording device according to a second aspect of the invention is the data recording device according to the first aspect of the invention, wherein the backup region is not managed by any file system.

In this data recording device, the backup region is not managed by any file system. Therefore, the backup data can assuredly be relied upon even when the power source is interrupted while the FAT and directory data are being backed up.

A data recording device according to a third aspect of the invention is the data recording device according to the first aspect or the second aspect of the invention, wherein the nonvolatile memory is different from the recording medium.

In this data recording device, the FAT and directory data recorded to the recording medium are backed up to the nonvolatile memory, which is different from the recording medium. Therefore, the backup data can assuredly be relied upon even if the power supply is interrupted while the FAT and directory data are being backed up.

A data recording device according to a fourth aspect of the invention is the data recording device of any of the first aspect through the third aspect of the invention, wherein, a power interruption determination flag for marking the occurrence of a power source interruption is recorded in the backup region when the FAT and directory data are backed up.

In this data recording device, the power interruption determination flag is recorded in the backup region. Accordingly, in the data recording device, whether a restoration process should be performed is automatically determined, on the basis of the recorded power interruption determination flag, during a restart.

A data recording device according to a fifth aspect of the invention is the data recording device according to any of the first aspect through the fourth aspect of the invention, wherein the recording medium is a removable medium in which a volume serial number for identifying the recording medium is recorded in the backup region when the FAT and directory data are backed up.

In this data recording device, a volume serial number for identifying the removable medium is recorded to the backup region. Accordingly, in the data recording device, when the removable medium inserted during a restart is determined, on the basis of the recorded volume serial number, not to be the removable medium inserted when the power source was interrupted, a restoration process can be avoided.

A data recording device according to a sixth aspect of the invention is the data recording device according to any of the first aspect through the fifth aspect of the invention, wherein the recording medium has a plurality of clusters including a first cluster and a second cluster that is different from the first cluster, and new file data is written to the second cluster, and a FAT chain is then reconnected to the second cluster, whereupon the first cluster is freed up in order to update the file data stored in the first cluster.

In this data recording device, new file data is written to an empty cluster and a FAT chain is then reconnected to the cluster in which the new file data has been written, whereupon the file data before the update is freed up. Accordingly, in the data recording device, the old file data can be reliably protected even when the power source is interrupted while the file data is being written.

A data recording device according to a seventh aspect of the invention is the data recording device according to any of the first aspect through the sixth aspect of the invention, wherein the nonvolatile memory is built-in.

In this data recording device, the backup region is provided to the built-in nonvolatile memory. Accordingly, in the data recording device, the FAT and directory data can readily be backed up.

A goods-processing device according to an eighth aspect of the invention comprises the data recording device of any of the first aspect through the seventh aspect of the invention.

The goods-processing device produces the same effect as the data recording device according to any of the first through seventh aspects of the invention. Accordingly, operation history, device setting data, and a variety of other data in addition to goods production information processed by the goods-processing device can be reliably saved in the goods-processing device.

### EFFECT OF THE INVENTION

In the data recording device according to the first aspect of the invention, when the FAT, directory data, and other file managing information are updated, the FAT and directory data are backed up to the backup region provided to the nonvolatile memory before being updated. Accordingly, in the data recording device, the FAT and directory data are protected. Therefore, during a restart, the FAT and directory data can be restored to a state that was present directly before a file operation was performed even if the power source was interrupted during the file operation.

In the data recording device according to the second aspect of the invention, the backup region is not managed by any file system. Therefore, the backup data can assuredly be relied upon even when the power source is interrupted while the FAT and directory data are being backed up.

In the data recording device according to the third aspect of the invention, the FAT and directory data recorded to the recording medium are backed up to the nonvolatile memory, which is different from the recording medium. Therefore, the backup data can assuredly be relied upon even if the power supply is interrupted while the FAT and directory data are being backed up.

In the data recording device according to the fourth aspect of the invention, the power interruption determination flag is recorded in the backup region. Accordingly, in the data recording device, whether a restoration process should be performed is automatically determined, on the basis of the recorded power interruption determination flag, during a restart.

In the data recording device according to the fifth aspect of the invention, a volume serial number for identifying the removable medium is recorded to the backup region. Accordingly, in the data recording device, when the removable medium inserted during a restart is determined, on the basis of the recorded volume serial number, not to be the removable medium inserted when the power source was interrupted, a restoration process can be avoided.

In the data recording device according to the sixth aspect of the invention, new file data is written to an empty cluster and a FAT chain is then reconnected to the cluster in which the new file data has been written, whereupon the file data from before the update is freed up. Accordingly, in the data recording device, the old file data can be reliably protected even when the power source is interrupted while the file data is being written.

In the data recording device according to the seventh aspect of the invention, the backup region is provided to the built-in nonvolatile memory. Accordingly, in the data recording device, the FAT and directory data can readily be backed up.

A goods-processing device according to an eighth aspect of the invention produces the same effect as the data recording device according to any of the first through seventh aspects of the invention. Accordingly, operation history, device setting data, and a variety of other data in addition to goods production information processed by the goods-processing device can be reliably saved in the goods-processing device.

### BRIEF DESCRIPTION OF THE DRAWINGS

FIG. 1 is a block diagram showing schematic configurations of a data recording device and a goods-processing apparatus comprising same;
FIG. 2 is a diagram showing a data structure of a CF (recording medium) contained in the data recording device;
FIG. 3 is a flowchart showing a process for writing a file to the CF (recording medium);
FIG. 4 is a flowchart showing details of processes for writing a directory entry and for writing a FAT that are included in the process for writing a file to the CF (recording medium);
FIG. 5 is a flow chart showing a process while the data recording device is starting up;
FIG. 6 is a diagram for describing a process for writing file data to the CF (recording medium); and
FIG. 7 is a diagram showing a modified example of the data recording device shown in FIG. 1.

### Key

- 1: Controller
- 2: CompactFlash (registered trademark) (recording medium)
- 6: Nonvolatile memory
- 10: Data recording device
- 20: Goods-processing apparatus
- 101: Data/subdirectory region
- 102: Root directory region
- 103, 104: FAT region

### BEST MODE FOR CARRYING OUT THE INVENTION

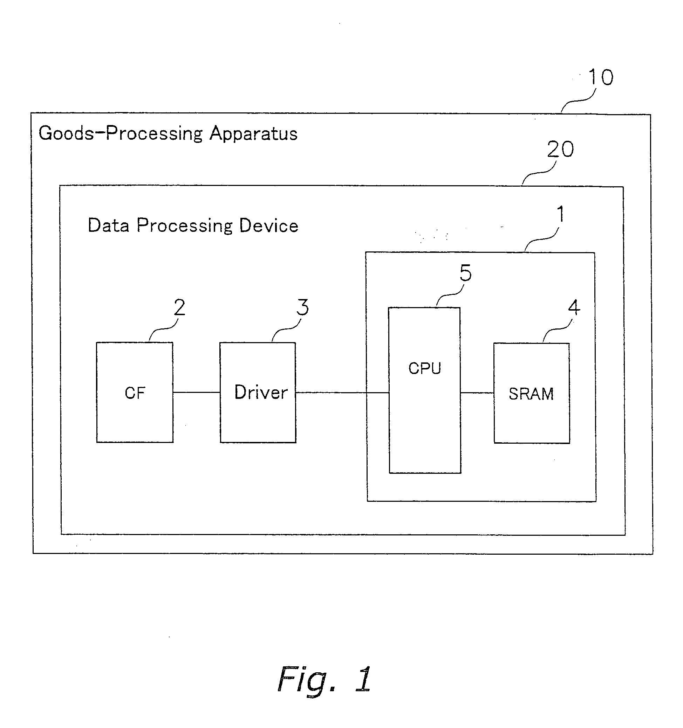

A data recording device 20 and a goods-processing apparatus 10 comprising same according to an embodiment of the present invention will be described below with reference to FIGS. 1 through 6.

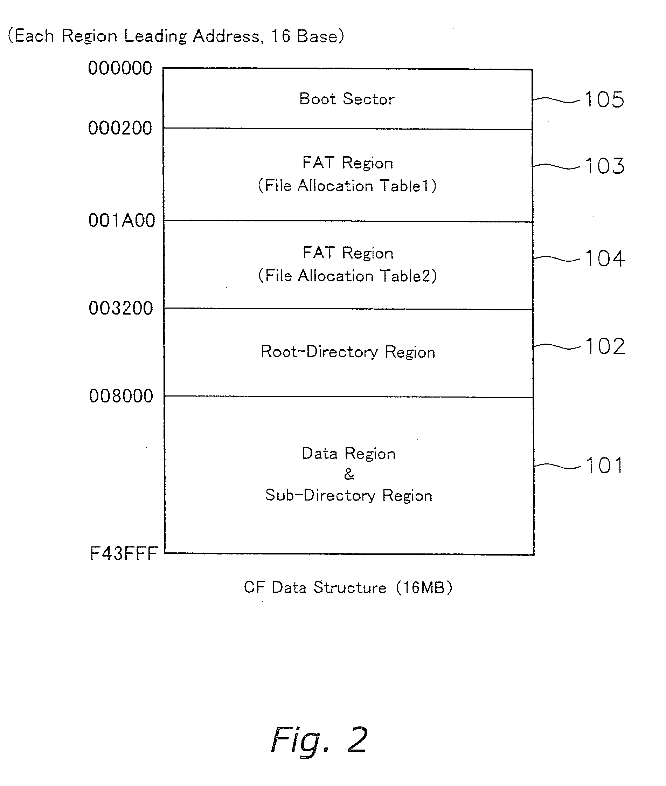

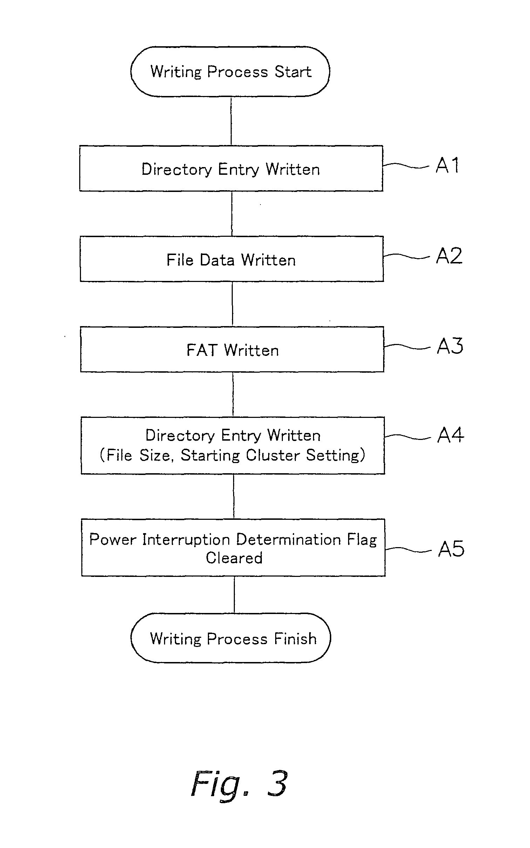

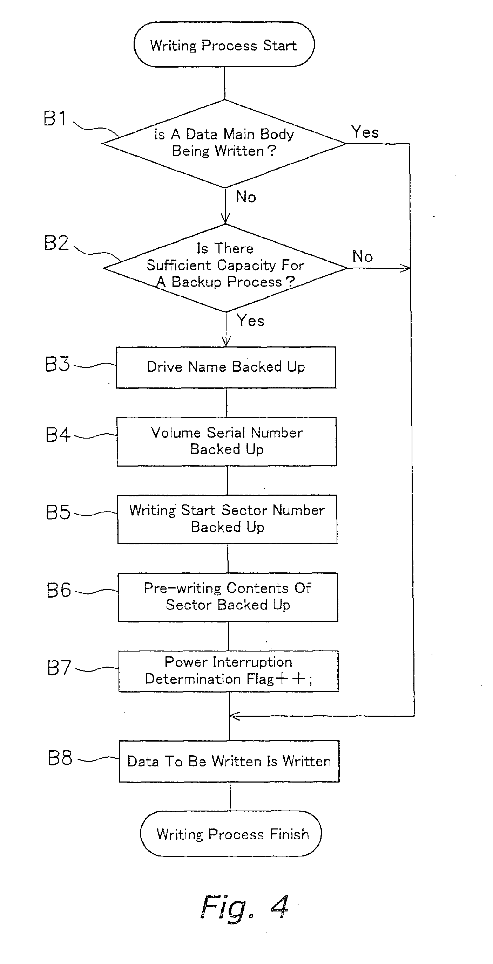

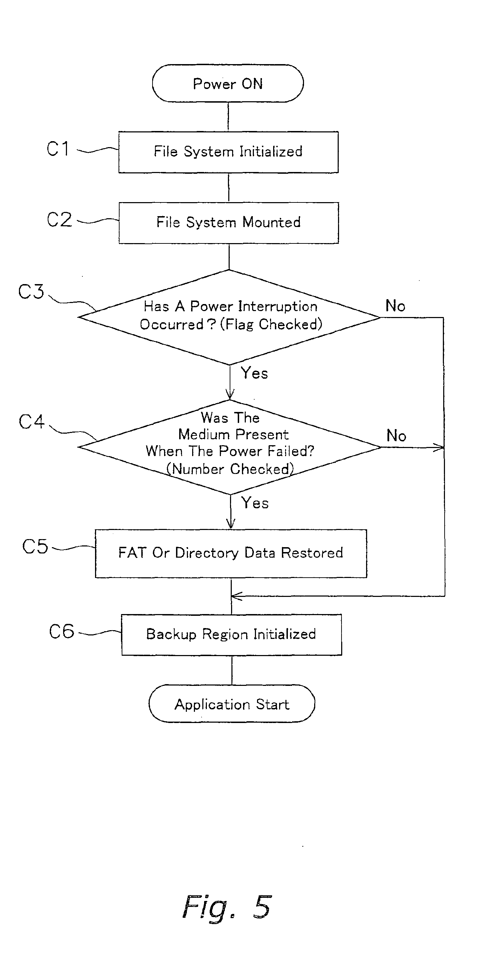

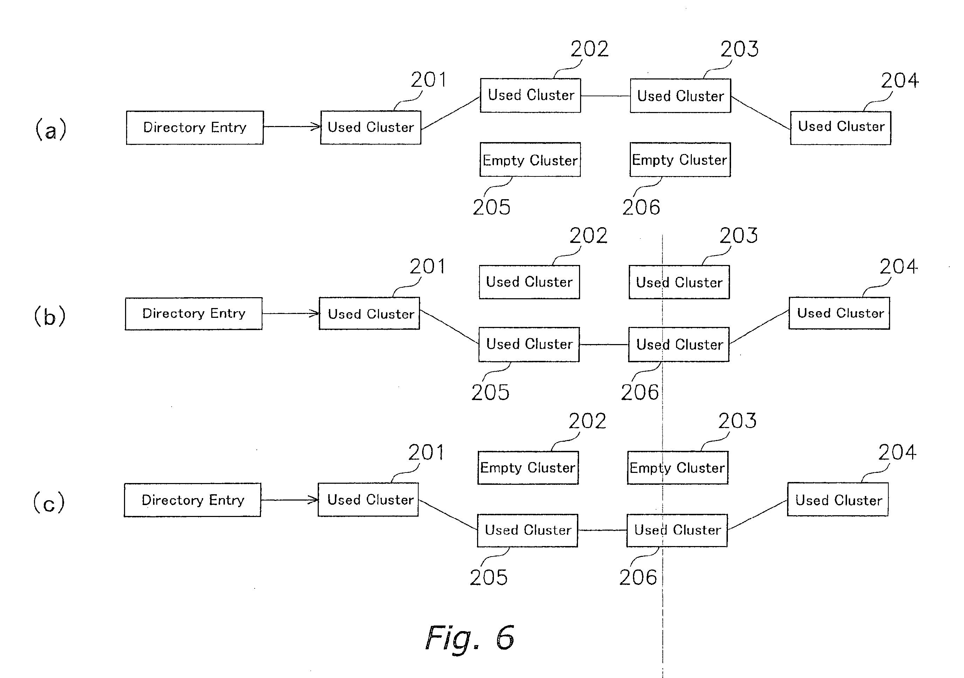

FIG. 1 is a block diagram showing schematic configurations of the data recording device 20 and the goods-processing apparatus 10 comprising same; and FIG. 2 is a diagram showing a data structure of a CompactFlash (registered trademark) (referred to below simply as "CF") 2 contained in the data recording device 20. FIG. 3 is a flowchart showing a process for writing a file to the CF 2; FIG. 4 is a flowchart showing details of processes for writing a directory entry and for writing a FAT that are included in the process for writing a file to the CF 2 shown in FIG. 3; and FIG. 5 is a flowchart showing a process performed by the data recording device 20 during startup. FIG. 6 is a diagram for describing a process for writing file data to the CF 2.

The goods-processing apparatus 10 is used, e.g., to weigh and package goods, print and apply goods labels, and perform other processes; and comprises the data recording device 20 that is capable of saving information related to the production of the goods, which is the object of the processing, as well as a variety of other data in order to deal with traceability and HACCP.

As shown in FIG. 1, the data recording device 20 comprises a controller 1, and the CF 2, which is insertably and removably connected to the controller 1 via a driver 3; wherein the production information and a variety of other data can be saved to the CF 2. A FAT file system that is compatible with Windows (registered trademark) is installed in the data recording device 20. Specifically, the CF 2 is managed with being divided into a plurality of clusters, and one cluster is further divided into, e.g., eight sectors.

As shown in FIG. 2, a data/subdirectory region 101, a root directory region 102, FAT regions 103, 104, and a boot sector 105 are provided in the CF 2. File data (data main body) and directory data for files and directories that are created in subdirectories are recorded in the data/subdirectory region 101. Directory data for files and directories created in the root directory of the drive are recorded in the root directory region 102. A file allocation table (FAT) is recorded in the FAT regions 103, 104. A boot record is recorded in the boot sector 105. As used herein, the term "directory data" corresponds to file managing information about file names, creation times and dates, file properties, file sizes, starting clusters and others. File managing information about the locations and order of clusters in the data region used by files and others is stored in the FAT. The FAT regions 103, 104 are necessary for file managing and are therefore formed into a double-layered structure in order to prevent reading and writing failures.

SRAM 4 whose power source is backed up is embedded in the controller 1 as nonvolatile memory that can steadily hold data and that can be accessed at high speeds. The SRAM 4 is provided with a backup region for backing up the data in the CF 2. The backup region is not managed by any file system. A CPU 5 is embedded in the controller 1. The CPU 5 is connected to the SRAM 4 and is used to perform, in accordance with a program stored in the SRAM 4, a process described below with reference to FIGS. 3 through 6.

In the process for writing a file to the CF 2, a directory entry is written (step A1), file data is written (step A2), a FAT is written (step A3), a directory entry is written (file size and starting cluster setting) (step A4), and a power interruption flag (described hereunder) is cleared (step A5) sequentially, as shown in FIG. 3.

Details of the writing processes of steps A1, A3, and A4 are as shown in FIG. 4. When the writing process starts, first, it is determined whether the data main body is to be written (step B1). When the data main body is to be written, the data to be written is written to the CF 2 without further steps being taken (step B8), and the writing process is finished. When the data main body is not to be written, i.e., when the FAT or directory data is to be written, the capacity of the backup region provided in the SRAM 4 is checked (step B2). When the capacity is insufficient for the backup process, the data to be written is written to the CF 2 without further steps being taken (step B8), and the writing process is finished.

When the capacity is sufficient for the backup process, the drive name, volume serial number, writing starting sector number, and the contents of the sector before writing are sequentially backed up to the backup region (steps B3 through B6). A power interruption determination flag is then incremented (step B7) and, finally, the FAT or directory data to be written is written to the CF 2 (step B8), and the writing process is finished. The power interruption determination flag is recorded to the backup region.

The startup process for the data recording device 20 will next be described with reference to FIG. 5.

When the data recording device 20 is started, the file system is initialized (step C1) and the file system is mounted (step C2). The power interruption flag is then checked (step C3) in order to determine whether the power source was interrupted while a file was being written. As described above, the power interruption determination flag is incremented by one every time the writing process in step A1, A3, or A4 finishes; and is cleared when all writing processes have finished without incident. Therefore, when the power interruption determination flag is zero, it is determined that no interruption in the power source occurred while a file was being written. When it is determined that the power source was not interrupted while a file was being written, the backup region is initialized (step C6) without a file restoration process (step C5) being performed.

When it is determined that the power supply was interrupted while a file was being written, the volume serial number of the CF 2 currently inserted and the volume serial number recorded in the backup region are compared (step S4) in order to determine whether the CF 2 currently inserted in the data recording device 20 is the medium that was inserted when the power source was interrupted. When the numbers do not match, i.e., when the CF 2 currently inserted is different from the medium inserted when the power source was interrupted, the backup region is initialized (step C6) without a file restoration process (step C5) being performed.

On the other hand, when the power interruption determination flag is one to three (i.e., it is determined that the power supply was interrupted while a file was being written) and the CF 2 currently inserted in the data recording device 20 is determined to be the medium inserted when the power supply was interrupted, a process for restoring the FAT or directory data is performed (step C5). The restoration process of step C5 is performed by writing the pre-writing-process contents of the sector, which were backed up to the backup region in step B6, to the sector of the CF 2 that is to be restored. The sector of the CF 2 that is to be restored is determined on the basis of the drive name backed up in step B3 and the writing starting sector number backed up in step B5. The backup region is then initialized (step C6). File managing information about file names, creation dates and times, file properties, file sizes, starting clusters, locations and order of used clusters, and others can thereby reliably be restored without damage even when the power source is interrupted while the FAT or directory data of the CF 2 is being written.

The power source for the data recording device 20 may also be interrupted while file data is being written to the data region 101 in step A2. In order to address such occurrences, the writing (updating) process is performed in the data recording device 20 using a procedure shown in FIG. 6. When file data is updated from a state of being stored in clusters 201 through 204, a search is made for empty clusters 205, 206 that are separate from the clusters 201 through 204, as shown in FIG. 6(a). New file data is then written to the located empty clusters 205, 206, and the FAT chain is reconnected to the clusters 205, 206 in which the new file data has been written, as shown in FIG. 6(b).

Once the FAT chain has been reconnected, the clusters 202, 203 that was used to record the old file data before the update and no longer be used to record any file data are freed up, as shown in FIG. 6(c). Therefore, the old file data is restored without damage even when the power source is interrupted while the file data is being updated.

### MODIFIED EMBODIMENT

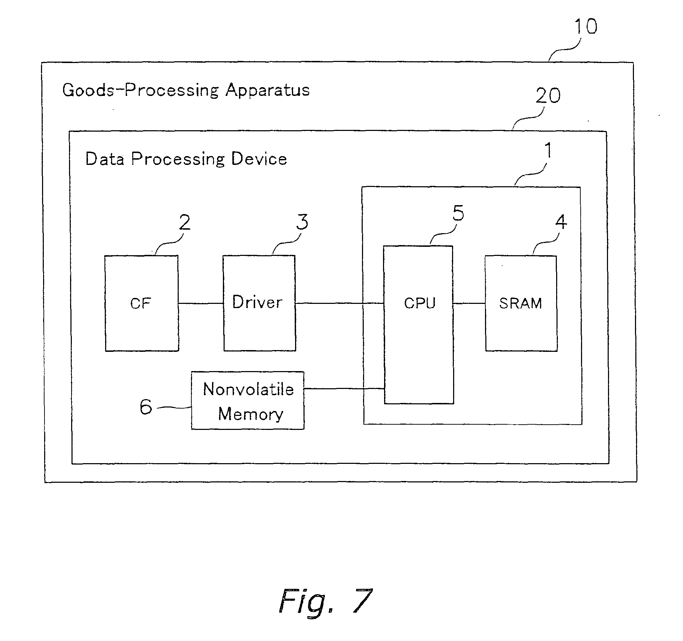

In the above embodiment, a backup region is provided to the SRAM 4. However, the backup region may also be provided to the nonvolatile memory 6, which is separate from the SRAM 4, as shown in FIG. 7.

In the goods-processing apparatus 10 shown in FIG. 7, the nonvolatile memory 6, which is different from the SRAM 4, is connected to the controller 1, and the backup region is provided to the nonvolatile memory 6. The configuration is the same as that of the above-described embodiment in all other respects.

### INDUSTRIAL APPLICABILITY

The present invention is useful as a data recording device for managing files by a FAT file system in which a FAT, which is file managing information, and directory data are protected, whereby, during a restart, the FAT and directory data can be restored to a state that was in effect directly before a file update or another file operation was performed even when a power source is interrupted during such a file operation. The present invention is additionally useful as a goods-processing apparatus comprising the data recording device.

## Claims

1. A data recording device for managing files using a FAT file system, comprising:
a recording medium configured and arranged to record file data, a FAT, and directory data related to the files; and
nonvolatile memory in which a backup region is provided, wherein
the FAT and the directory data are backed up in the backup region before the FAT and the directory data are updated.

2. The data recording device of claim 1, wherein the backup region is not managed by any file system.

3. The data recording device of claim 1 or 2, wherein the nonvolatile memory is different from the recording medium.

4. The data recording device of any of claims 1 through 3, wherein a power interruption determination flag for marking the occurrence of a power source interruption is recorded in the backup region when the FAT and the directory data are backed up.

5. The data recording device of any of claims 1 through 4, wherein the recording medium is a removable medium, and
a volume serial number for identifying the recording medium is recorded in the backup region when the FAT and directory data are backed up.

6. The data recording device of any of claims 1 through 5, wherein
the recording medium has a plurality of clusters including a first cluster and a second cluster that is different from the first cluster; and
new file data is written to the second cluster, and a FAT chain is then reconnected to the second cluster, whereupon the first cluster is freed up in order to update the file data stored in the first cluster.

7. The data recording medium of any of claims 1 through 6, wherein the nonvolatile memory is built-in.

8. A goods-processing apparatus comprising the data recording device of any of claims 1 through 7.
